# EUROPEAN PATENT SPECIFICATION

(11) **EP 1 501 646 B1**
(45) Date of publication and mention of the grant of the patent: **06.04.2011**
(21) Application number: 03723525.6
(22) Date of filing: 06.05.2003
(51) Int. Cl.: B21H 5/02, F16H 55/08, B22F 5/08

(54) **CROWN GEAR**
KRONRAD
ROUE CONIQUE

(30) Priority: 08.05.2002 NL 1020562
(43) Date of publication of application: 02.02.2005
(73) Proprietor: ASS AG, 3186 Düdingen (CH)
(72) Inventor: MEYER, Michael, D-10825 Berlin (DE); DONDERTMAN, Johan, Willem, Gerald, NL-7475 RM Markelo (NL)
(74) Representative: Brookhuis, Hendrik Jan Arnold
(86) International application number: PCT/NL2003/000332
(87) International publication number: WO 2003/095128

(56) References cited:
- EP-A- 1 574 271
- WO-A-98/46898
- US-A- 3 631 703
- US-A- 3 709 015
- US-A- 5 454 702
- US-A- 5 729 822
- US-A- 5 845 533
- US-A- 5 884 527
- PATENT ABSTRACTS OF JAPAN vol. 014, no. 351 (M-1003), 30 July 1990 (1990-07-30) & JP 02 121740 A (ONDO KOSAKUSHO:KK;OTHERS: 01), 9 May 1990 (1990-05-09)
- PATENT ABSTRACTS OF JAPAN vol. 2000, no. 08, 6 October 2000 (2000-10-06) & JP 2000 130559 A (NAMIKI PRECISION JEWEL CO LTD), 12 May 2000 (2000-05-12)
- GUUS BASSTEIN, ANNE SIJTSTRA: 'New Developments in Design, Manufacturing and Applications of Cylkro-(Face) Gears' AGMA TECHNICAL PAPER October 1993, pages 1 - 12, XP008002398

## Description

The invention relates to a crowngear transmission in accordance with the preamble of claim 1. Crowngears of this type are known and are made, for example by forging using a forging die or with the aid of a sintering process, in which metal powder is pressed into a mold and the material which has been pressed in is stabilized by heating. US 5,845,533 describes such a crown gear and an advantageous tooth profile of such a crown gear. In these known crowngears, the tooth flanks are often insufficiently strong and/or accurate and there is a need for it to be possible to harden and/or remachine them. During this remachining of the product, the remachining tool often quickly becomes worn, which is disadvantageous.

To avoid this drawback, the crowngear transmission is designed in accordance with the characterizing clause of claim 1. As a result, during the remachining, the remachining tool does not come into contact with the crowngear tooth root, or does so to a lesser extent, with the result that wear is avoided and the remachining tool remains able to carry out the remachining operation for longer.

According to an improvement, the crowngear transmission is designed in accordance with claim 2. This makes the crowngear easier to produce using a forging die.

According to a further improved embodiment, the crowngear transmission is designed in accordance with claim 3. Designing the fillet radius to be as large as possible, the tooth root of the crowngear is as strong as possible and is easy to produce.

According to an improved embodiment, the unmachined crowngear transmission is designed in accordance with claim 4. Since the root fillet of the crowngear has a constant fillet radius, the mold or dive used to make the crowngear is simpler in shape and therefore easier to make.

According to a further improvement, the crowngear transmission is designed in accordance with claim 5. As a result, that part of the mold or die which forms the tooth space of the crowngear can be designed to be as wide as possible, yet the crowngear can nevertheless come clear of the mold or die, with the result that the mold or die has the maximum possible strength and/or resistance to wear.

The invention also encompasses a crowngear transmission in accordance with claim 6. The advantage of this crowngear is that it can be made in a way in which the wear to the remachining tool is minimal.

According to an improvement, the crowngear transmission is designed in accordance with claim 7. This ensures that the remachined crowngear tooth flank has a sufficient hardness.

The invention is explained below on the basis of a number of exemplary embodiments and with the aid of a drawing, in which:
figure 1 shows a first embodiment of a crowngear transmission,
figure 2 shows a second embodiment of a crowngear transmission,
figure 3 shows a cross section through the crowngear shown in figure 1,
figures 4a-4g show cross sections a-a to g-g inclusive through figure 3, and
figure 5 shows an alternative embodiment on the basis of cross section g-g from figure 3.

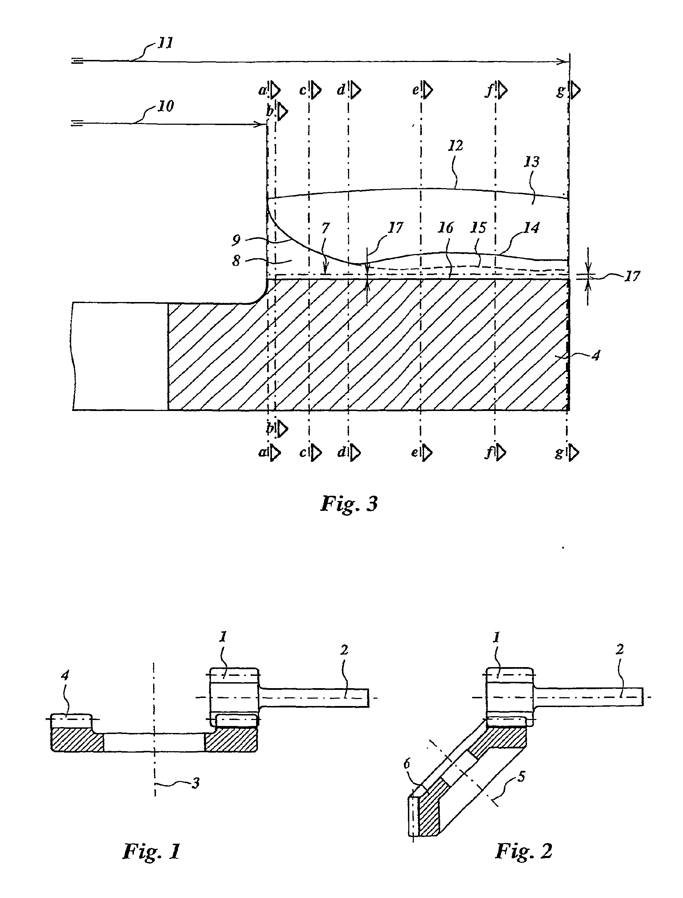

Figure 1 shows a crowngear transmission in which a cylindrical pinion 1 provided with toothing is in meshing with crowngear teeth of a crowngear 4. The pinion 1 can rotate around a pinion center axis 2, and the crowngear 4 can rotate around a crowngear center axis 3, the pinion center axis 2 and the crowngear center axis 3 being perpendicular to one another. This is then a flat crowngear 4. In the embodiment shown, the pinion center axis 2 and the crowngear center axis 3 intersect one another, but it is also possible to use designs in which the pinion center axis 2 and the crowngear center axis 3 cross one another. The cylindrical pinion 1 is provided with involute toothing, of which the involute tooth flanks are meshing with crowngear tooth flanks of the crowngear teeth of the crowngear 4, and during meshing the toothing of the cylindrical pinion moves in crowngear tooth spaces between the crowngear teeth. The shape of the crowngear tooth flanks is defined by the involute part of the toothing of the pinion 1, the number of teeth of the crowngear and the positions of the pinion 1 and the crowngear 4 with respect to one another. In the exemplary embodiment shown, the cylindrical pinion 1 is provided with straight toothing, but the invention can equally well be used if the pinion 1 is helically toothed.

Figure 2 shows a crowngear transmission in which the toothing of the cylindrical pinion 1 is in engagement with the crowngear teeth of a conical crowngear 6 which can rotate about a crowngear center axis 5, and in which the pinion center axis 2 and the crowngear center axis form an angle with one another which is not equal to ninety degrees. As in the embodiment discussed in figure 1, the pinion center axis 1 and the crowngear center axis 5 can cross or intersect one another, and the cylindrical pinion 1 may be provided with straight or helical toothing.

The crowngears 4 and 6 shown in figures 1 and 2 can be made in various ways; the process selected will depend on the number of crowngears to be made and on the required accuracy. In the usual method of producing small series of crowngears, the crowngear toothing is generated using a material-removing machining step. In this case, the crowngear toothing is formed on a ring or a solid body by removing the crowngear tooth spaces between the crowngear teeth using a material-removing process, for example a hobbing machine. If appropriate, the crowngear tooth flanks of the crowngear are hardened, and the hardened crowngear is machined again, for example using a grinding wheel.

Where large series are required, the crowngears can be made by chipless shaping, for example forging using a die. The crowngear tooth flanks are generally remachined, if appropriate after having been hardened, in which case the remachining step may comprise grinding and/or a process similar to forging in which the crowngear tooth flanks are repressed and/or calibrated. Large series of crowngears are also made by employing a sintering process, in which pulverulent metal is pressed into a mold and the pressed product is consolidated by heating. The crowngear tooth flanks of crowngears produced in this way may if appropriate also be remachined by being repressed and/or calibrated.

In the above-described processes for making series of crowngears, use is made of molds or dies, the shape of the mold or die being based on the shape of the crowngear which is to be made. When the mold or die is being made, by way of example, use is made of a crowngear which has been made by material-removing machining and which is used as an electrode, by means of which the shape of the crowngear tooth flanks is formed in the mold or die by spark erosion. Another known process is material-removing machining using NC point-to-point control of the tool. To improve the options for remachining the crowngear made in the mold or die, the mold or die is adapted so that the crowngear made using the mold or die requires a shape as described below. The remachining of the crowngear is improved as a result of the fact that during the remachining the remachining tool comes into little or no engagement with the crowngear tooth root, and consequently the tool is subject to less wear.

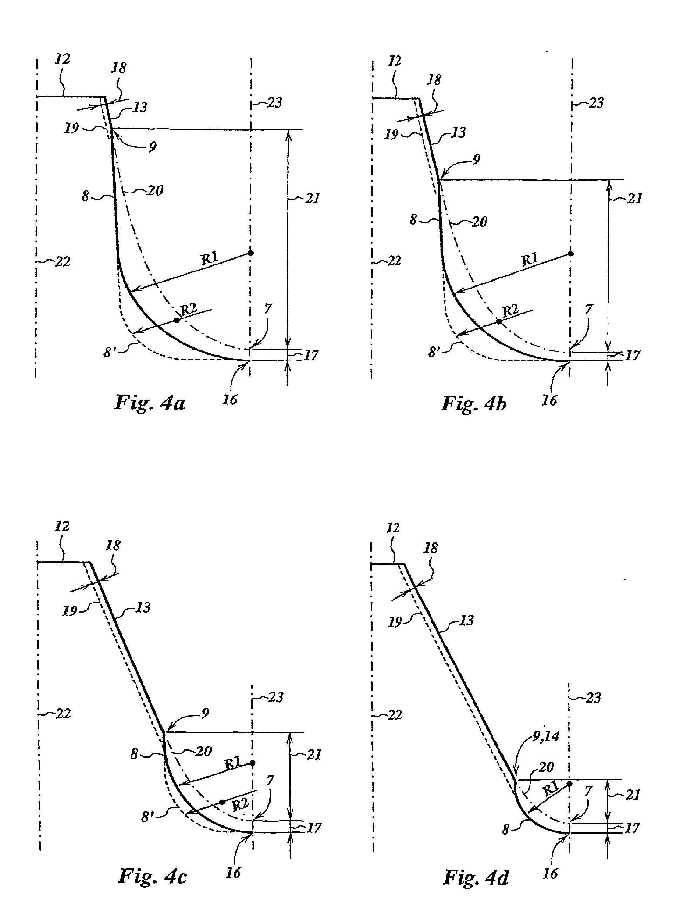

Figure 3 shows the cross section through the deepest point of the crowngear tooth space, showing the side view of the crowngear tooth of a planar crowngear 4 which is suitable for interacting with a cylindrical straight-toothed pinion 1. Figures 4a-4g show cross sections a-a to g-g, inclusive, of the crowngear tooth shown in figure 3, a center axis 22 being the center of the crowngear tooth and a center axis 23 passing through the deepest point of the crowngear tooth space.

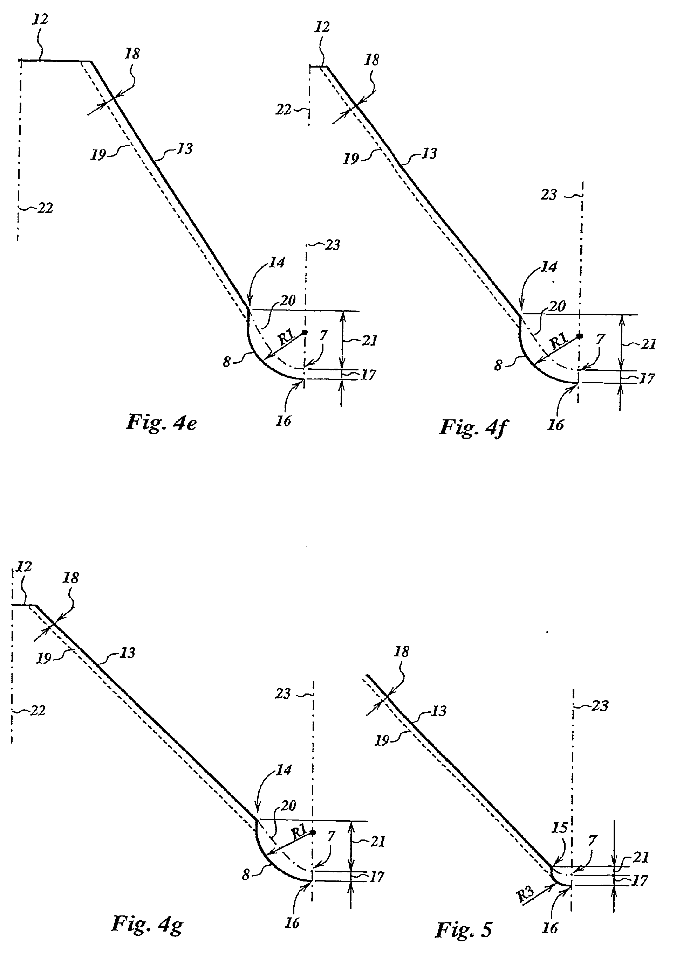

The planar crowngear 4 has a crowngear toothing with an internal diameter 10 and an external diameter 11 which form the boundaries of each crowngear tooth. Each crowngear tooth has two crowngear tooth flanks 13 which are connected at the top by a crowngear tooth head 12. As is known, the shape of the crowngear tooth flanks 13 is derived from the involute of the cylindrical pinion 1 with which the crowngear 4 meshes. The involute tooth flanks of the teeth of the cylindrical pinion are connected to one another at the outer circumference by a pinion tooth head. The relative movement of this pinion tooth head with respect to the crowngear during rotation of the cylindrical pinion with respect to the rotating crowngear defines the shape of a theoretical crowngear tooth root 20 which is indicated in figure 4 by a dot-dashed line and has a deepest point 7. During the remachining of the crowngear tooth flank 13 using a tool whose shape is derived from the involute of the cylindrical pinion 1, it is advantageous if the remachining tool only or predominantly comes into contact with the crowngear tooth flank 13, and therefore in the embodiment shown there is a crowngear
tooth root 8 which connects the crowngear tooth flanks 13 of two adjacent crowngear teeth. In the center of the crowngear tooth space, the crowngear tooth root 8 has a clearance depth 17 with respect to the theoretical crowngear tooth root 20, where it has a deepest point 16, and this clearance depth 17 remains present over most of the theoretical crowngears tooth root 20, and only in the vicinity of the point where the crowngear tooth root 8 adjoins the crowngear tooth flank 13 is the distance between the crowngear tooth root 8 and the theoretical crowngear tooth root 20 less than the clearance depth 17. In the exemplary embodiment shown in figure 3, with a planar crowngear 4, the crowngear tooth root 8 is designed with a fillet with a fillet radius R1, the center of which lies on the center axis 23 of the crowngear tooth space. In the vicinity of the internal diameter 10 of the crowngear teeth, the fillet radius R1 is large and is tangent on a connecting surface which intersects the crowngear tooth flank 13 at a transition 9. The connecting surface forms a small angle of, for example, two degrees with the center axis 3 of the crowngear 4, in such a manner that the crowngear tooth root 8 has clearance in the direction of the crowngear center axis 3. in the vicinity of the internal diameter 10, the transition 9 is the point on the crowngear tooth flank 13 where the crowngear tooth flank 13 mergers into the theoretical crowngear tooth root 20. In the vicinity of the external diameter 11, as shown in cross sections e-e, f-f and g-g, the fillet radius R1 has a minimum value which is greater than the mean fillet of the theoretical crowngear tooth root 20. In this case, the transition to the crowngear tooth flank 13 is denoted by 14, and it is clear that here part of the crowngear tooth flank 13 disappears as a result of the use of the .clearance depth 17. In figure 3, the lower boundary of the crowngear tooth flank 13 is indicated by lines 9 and 14, the distance from the lower boundary of the crowngear tooth flank 13 to the deepest point 7 of the theoretical crowngear tooth root 20 is denoted by 21 in figure 4.

Figures 4a-4c also show an alternative embodiment with a crowngear tooth root 8' which is indicated by a dashed line. In this case, the fillet R2 of the root fillet 8 in the vicinity of the internal diameter 10 (cf. figure 3) remains equal to the minimum value of the root fillet R1 at the external diameter 11 (cf. figure 3) and consequently the radius which can be formed using a tool with one fillet radius is always the same in a form from which the die or mold can be derived by means of spark erosion or for controlling the NC point-to-point control of the material-removing tool. It is then also possible to take account of one fillet radius during forging.

Figure 5 shows a third embodiment, illustrated in the same cross section as that shown in figure 4g. The fillet radius is in this case shown to be significantly smaller, with fillet radius R3, the transition to the crowngear tooth flank 13 being denoted by 15. This transition can be seen in the side view presented in figure 3 as a dashed line. As a result of a smaller fillet radius R3 being used in the vicinity of the external diameter 11, a larger part of the crowngear tooth flank 13 remains available to come into engagement with the toothing of the pinion 1. In figures 4 and 5, a dashed line indicates a remachined crowngear tooth flank 19. This remachined crowngear tooth flank 19 lies at a remachining depth 18 below the crowngear tooth flank 13. The remachining depth 18 is in this case indicated as a constant distance. However, it will be clear that variations in the remachining depth 18 are determined by the process which was carried out prior to the remachining and the deformations to the crowngear tooth flank 13 which occurred as a result.

In many cases, the remachining will comprise grinding or skive-hobbing which is carried out after hardening. The hardening process used is often case-hardening with a hardening depth of approx. 0.15 x the modulus of the cylindrical pinion 1. To maintain sufficient hardness below the remachined crowngear tooth flank 19, the normal value for the remachining depth 18 is approximately 0.15 millimeter, and this value will locally vary as a result of the deformations described above. However, it is also possible for the remachining depth 18 required to be smaller. For example, if, during series production, the material quality is constant, the dimensions are always the same and the machining operations are always carried out identically, the warp caused by hardening is easier to predict. For these and similar reasons, in series production the remachining depth 18 may be approximately 0.08 mm, so that the machining time required for the remachining can be shorter.

To ensure that the variations in the remachining depth 18 for the entire crowngear tooth flank 13 is dependent only on the deformations, the crowngear tooth flank 13 and the remachined crowngear tooth flank 19 have to be based on the same involute, i.e. on cylindrical pinions with an identical base circle, with the remachining depth 18 produced by a difference in the W dimension of the pinion, for example by the pinion acquiring a different addendum modification. If appropriate, the difference in the W dimension can be approximated in a known way by using tools which are based on cylindrical pinions with different numbers of teeth.

To ensure that the wear to the remachining tool is minimal, it is important to make the clearance depth 17 greater than the maximum expected remachining depth 18. If the remachining is carried out by compression of the surface of the crowngear tooth flank 13, for example as a result of a pinion being rolled over a crowngear which has been produced by means of a sintering process, the remachining depth 18 is low, for example 0.03 millimeter. In this case, a clearance depth 17 of 0.05 millimeter is sufficient. It will be clear that in practice, in view of the forces which occur in the current state of the art, this process is only used for crowngears with an external diameter of less than 200 millimeters.

If the remachining is carried out by grinding, the remachining depth 18 can be small for small crowngears, since in this case the deformations which occur during production and/or hardening are slight. In the case of small crowngears, the remachining addendum 18 may also be approximately 0.03 millimeter and a clearance depth 17 of 0.05 millimeter is sufficient. In the case of crowngears with a modulus of greater than 3 millimeters, in most cases the deformations which occur during hardening mean that a remachining depth 18 of at least 0.15 millimeter is required, and consequently the clearance depth 17 is preferably more than 0.22 millimeter. As described above, the clearance depth 17 can be smaller for large series and accurately controlled processes, for example 0.08 mm.

The minimum fillet radius which is used for the crowngear tooth root 18 is dependent on the process which is used to produce the crowngear 4. As stated above, in the case of a sintering process or injection molding, a minimum fillet radius which is relatively small, for example 0.3 millimeter, will be selected. In the case of forging, a larger minimum fillet radius will be selected for this improvement to the process, for example a minimum fillet radius of 1.0 millimeter. To improve the strength of the forging die, it is also possible for the transition from the root fillet 8 to the crowngear tooth flank 13, at the location of the transition 9, 14 or 15, to be provided with a fillet radius which may also be at least 1.0 millimeter. It is also possible for the design of the crowngear 4 to be modified in such a manner that the crowngear tooth head 12 is also provided with a fillet radius.

In the exemplary embodiments shown, the basis used has been a planar crowngear 4. If a conical crowngear 6 is used, the design of the crowngear remains more or less the same. In order for the crowngear teeth, and in particular the crowngear tooth root 8, to keep clearance in a mold or die, the mold or die has to be shaped in such a manner that the crowngear tooth root 8 is clear in the direction of the crowngear center axis 5, in which case, in view of the particular shape of the crowngear tooth flank 13 with an alternating inclination, it is not necessary for the crowngear tooth root 8 to be clear with respect to the direction of the center axis 22 of the crowngear tooth.

## Claims

1. A crowngear transmission including a crowngear and a cylindrical pinion meshing with said crowngear,
the cylindrical pinion (1) having a pinion center axis (2) and helical toothing or straight toothing of which the length extends substantially parallel to the pinion center axis (2), the teeth of said toothing comprising involute tooth flanks, which involute tooth flanks of a tooth are connected to each other by a pinion tooth head,
the crowngear (4; 6) comprising:
- a crown gear center axis (3), which in use is at a relative angle other than zero degrees to the pinion center axis (2), and
- a solid or annular body with crowngear toothing which has been made by chipless forming with the aid of a mold or die,
which crowngear toothing comprises crowngear teeth which are positioned over a tooth width on the solid or annular body around the crowngear center axis (3;5) with crowngear tooth spaces between the crowngear teeth,
each crowngear tooth having two crowngear tooth flanks (13),
the shape of the crowngear tooth flanks being derived from the involute tooth flanks of the teeth of the cylindrical pinion (1), the number of teeth on the crowngear and the positions of the pinion and the crowngear with respect to each other,
each of the crowngear teeth further comprising a crowngear tooth head (12) for connecting the crowngear tooth flanks at the top of the crowngear tooth, and
a crowngear tooth root (8;8') for connecting the crowngear tooth flanks of adjacent crowngear teeth on the root side of the crowngear tooth in the crowngear tooth space,
the crowngear tooth root having a theoretical root fillet (20) which is derived from the relative movement of the pinion tooth head with respect to the crowngear, which theoretical root fillet (20) has a deepest point (7),
**characterized in that** the crowngear tooth root (8;8') of the crowngear, at the deepest point (16) of the crowngear tooth space, has a clearance depth (17) with respect to the theoretical root fillet (20), and therewith a reduced surface area of the crowngear tooth flank.

2. A crowngear transmission according to claim 1, in which the crowngear tooth root (8,8'), over the entire tooth width, has a first fillet with a fillet radius(R1) which is greater than 1.0 millimeter.

3. A crowngear transmission according to claim 1 or 2, in which the crowngear tooth root (8,8'), over the entire tooth width, has a first fillet with a fillet radius (R1), the first fillet radius merges continuously, at the deepest point of the crowngear tooth space, into the first fillet radius of the opposite crowngear tooth, and the fillet radius(R1) is larger in the vicinity of a smaller diameter (10) of the crowngear toothing than in the vicinity of a larger diameter (11) of the crowngear toothing.

4. A crowngear transmission according to claim 1 or 2, in which, in the vicinity of a larger diameter (11) of the crowngear toothing, the first fillet has a fillet radius (R1) which continues without interruption into both crowngear teeth, and in the vicinity of a smaller diameter (10) of the crowngear toothing the first fillet maintains the same fillet radius (R2) on both sides, with a planar or conical part in the vicinity of the deepest point (16) of the crowngear tooth root.

5. A crowngear transmission according to the preceding claims, in which the crowngear tooth root (8,8') has a first fillet over the entire tooth width, with a fillet radius (R1), and the first fillet merges into a connecting surface which is approximately perpendicular to the solid or annular body and which intersects the tooth flank, and in which both connect surfaces of a crowngear tooth have clearance in the direction of the crowngear center axis (3,5).

6. A crowngear transmission according to one of the preceding claims in which the crowngear tooth flank (13) of the crowngear has been machined by remachining, for example milling and/or grinding and/or rolling or skive-hobbing.

7. A crowngear transmission according to claim 6, in which the crowngear tooth flank (13), prior to the remachining, has been hardened with a hardening depth which is greater than the minimum value of the clearance depth (17).

8. A crowngear transmission according to the preceding claims, in which the clearance depth (17) extends up to the tooth flank (13).

9. A method for manufacturing a crowngear transmission according to claim 1,
which method comprises the following steps:
- selecting the geometry of a cylindrical pinion (1) with which the crown gear to be manufactured is intended to mesh,
said cylindrical pinion (1) having a pinion center axis (2) and helical toothing or straight toothing of which the length extends substantially parallel to the pinion center axis (2), the teeth of said toothing comprising involute tooth flanks, which involute tooth flanks of a tooth are connected to each other by a pinion tooth head,
- selecting the desired number of teeth for the crowngear (4;6),
- determining the relative positions of the cylindrical pinion (1) and the crowngear (4;6) when meshing,
- determining the shape of the crown gear tooth flanks (13) and the theoretical root fillet (20) based on the selected geometry of the cylindrical pinion, the desired number of teeth for the crowngear (4;6) and the rotative positions of the cylindrical pinion (1) and the crowngear (4;6) when meshing,
- providing a mould or die having a cavity for forming the crowngear (4;6), which cavity has a cavity shape that allows forming of a crowngear (4;6) that has tooth flanks (13) of the determined shape, which tooth flanks (13) are provided with a remachining allowance (18) and the crowngear tooth root (8;8') of the crowngear, at the deepest point (16) of the crowngear tooth space, has a clearance depth (17) with respect to the theoretical root fillet (20), and therewith a reduced surface area of the crowngear tooth flank,
- forming the crowngear (4;6) in the mold or die,
- providing a cylindrical pinion (1) which has a geometry in accordance with the selected pinion geometry,
- combining the crowngear (4;6) and the cylindrical pinion (1).

10. Method according to claim 11,
which method comprises the further step of hardening the tooth flanks (13) of the crowngear.

11. Method according to claim 10 or 11,
which method comprises the further step of remachining the tooth flanks (13) of the crowngear, by which remachining the remaching allowance is removed partly or entirely.

## Patentansprüche

1. Zahnscheibengetriebe, umfassend eine Zahnscheibe und ein zylindrisches Ritzel, das in die Zahnscheibe eingreift:
wobei das zylindrische Ritzel (1) eine Mittelachse (2) und Schrägverzahnung oder
Geradverzahnung aufweist, deren Länge sich im Wesentlichen parallel zur Mittelachse (2) des Ritzels erstreckt, die Zähne der Verzahnung evolvente Zahnflanken umfassen, die evolventen Zahnflanken eines Zahnes durch einen Zahnkopf des Ritzels miteinander verbunden sind,
wobei die Zahnscheibe (4;6) folgendes umfasst:
- eine Zahnscheibenmittelachse (3), die sich unter Verwendung in einem von null Grad verschiedenen Winkel bezüglich der Mittelachse des Ritzels (2) befindet, und
- einen massiven oder ringförmigen Körper mit Zahnscheibenverzahnung, der durch spanlose Formgebung mit Hilfe einer Form oder eines Umformwerkzeugs hergestellt wurde,
wobei die Verzahnung der Zahnscheibe Zahnscheibenzähne umfasst, die über eine Zahnbreite auf dem massiven oder ringförmigen Körper um die Zahnscheibenmittelachse (3;5) herum mit Zwischenräumen zwischen den Zähnen der Zahnscheibe positioniert sind,
wobei jeder Zahnscheibenzahn zwei Zahnflanken (13) aufweist, die Form der Zahnflanken der Zahnscheibe sich von den evolventen Zahnflanken der Zähne des zylindrischen Ritzels (1), der Anzahl der Zähne auf der Zahnscheibe und der Positionen des Ritzels und der Zahnscheibe zueinander ableitet,
wobei jeder der Zähne der Zahnscheibe weiterhin einen Zahnkopf (12) zum Verbinden der Zahnflanken der Zahnscheibe oben auf dem Zahnscheibenzahn umfasst, und eine Zahnscheibenzahnbasis (8;8') zum Verbinden der Zahnscheibenzahnflanken benachbarter Zahnscheibenzähne auf der Basisseite des Zahnscheibenzahns in dem Zahnzwischenraum der Zahnscheibe,
wobei die Zahnbasis der Zahnscheibe eine theoretische Ausrundung (20) der Basis aufweist, die sich aus der relativen Bewegung des Zahnkopfs des Ritzels in Bezug auf die Zahnscheibe ableitet, wobei die theoretische Ausrundung (20) der Basis einen tiefsten Punkt (7) aufweist,
**dadurch gekennzeichnet, dass** die Zahnbasis (8;8') der Zahnscheibe am tiefsten Punkt (16) des Zahnzwischenraums der Zahnscheibe ein Tiefenspiel (17) in Bezug auf die theoretische Ausrundung (20) der Basis und damit eine verkleinerte Oberfläche der Zahnflanke der Zahnscheibe aufweist.

2. Zahnscheibengetriebe nach Anspruch 1, in dem die Zahnbasis (8,8') der Zahnscheibe über die gesamte Zahnbreite eine erste Ausrundung mit einem Ausrundungsradius (R1) aufweist, der größer als 1,0 Millimeter ist.

3. Zahnscheibengetriebe nach Anspruch 1 oder 2, in dem die Zahnbasis (8,8') der Zahnscheibe über die gesamte Zahnbreite eine erste Ausrundung mit einem Ausrundungsradius (R1) aufweist, der erste Ausrundungsradius am tiefsten Punkt des Zahnzwischenraums der Zahnscheibe kontinuierlich in den ersten Ausrundungsradius des gegenüberliegenden Zahnscheibenzahns übergeht, und der Ausrundungsradius (R1) in der Nähe eines kleineren Durchmessers (10) der Verzahnung der Zahnscheibe größer ist als in der Nähe eines größeren Durchmessers (11) der Verzahnung der Zahnscheibe.

4. Zahnscheibengetriebe nach Anspruch 1 oder 2, in dem in der Nähe eines größeren Durchmessers (11) der Verzahnung der Zahnscheibe die erste Ausrundung einen Ausrundungsradius (R1) aufweist, der ohne Unterbrechung zu beiden Zahnscheibenzähnen hin verläuft, und in der Nähe eines kleineren Durchmessers (10) der Verzahnung der Zahnscheibe die erste Ausrundung den selben Ausrundungsradius (R2) auf beiden Seiten mit einem ebenen oder konischen Teil in der Nähe des tiefsten Punktes (16) der Zahnbasis der Zahnscheibe beibehält.

5. Zahnscheibengetriebe nach einem der vorhergehenden Ansprüche, in dem die Zahnbasis (8,8') der Zahnscheibe eine erste Ausrundung mit einem Ausrundungsradius (R1) über die gesamte Zahnbreite aufweist, und die erste Ausrundung in eine Anschlussfläche übergeht, die näherungsweise senkrecht zu dem massiven oder ringförmigen Körper steht und die die Zahnflanke schneidet, und in dem beide Anschlussflächen eines Zahnscheibenzahns in Richtung der Mittelachse der Zahnscheibe (3,5) Spiel aufweisen.

6. Zahnscheibengetriebe nach einem der vorhergehenden Ansprüche, in dem die Zahnflanke (13) der Zahnscheibe durch Nachbearbeiten, zum Beispiel durch Fräsen und/oder Schleifen und/oder Walzen oder Schälwalzfräsen bearbeitet wurde.

7. Zahnscheibengetriebe nach Anspruch 6, in dem die Zahnflanke (13) der Zahnscheibe vor der Nachbearbeitung mit einer Einhärtetiefe, die größer ist als der minimale Wert des Tiefenspiels (17), gehärtet wurde.

8. Zahnscheibengetriebe nach einem der vorhergehenden Ansprüche, in dem das Tiefenspiel (17) sich bis zur Zahnflanke (13) erstreckt.

9. Verfahren zur Herstellung eines Zahnscheibengetriebes nach Anspruch 1, wobei das Verfahren die folgenden Schritte umfasst:
- Auswählen der Geometrie eines zylindrischen Ritzels (1) in das die herzustellende Zahnscheibe eingreifen soll,
wobei das zylindrische Ritzel (1) eine Mittelachse (2) und Schrägverzahnung oder Geradverzahnung aufweist, deren Länge sich im Wesentlichen parallel zur Mittelachse (2) des Ritzels erstreckt, die Zähne der Verzahnung evolvente Zahnflanken umfassen, die evolventen Zahnflanken eines Zahnes durch einen Zahnkopf des Ritzels miteinander verbunden sind,
- Auswählen der gewünschten Anzahl an Zähnen für die Zahnscheibe (4;6),
- Bestimmen der relativen Positionen des zylindrischen Ritzels (1) und der Zahnscheibe (4;6) beim Eingreifen,
- Bestimmen der Form der Zahnflanken (13) der Zahnscheibe und der theoretischen Basisausrundung (20) basierend auf der ausgewählten Geometrie des zylindrischen Ritzels, der Anzahl an Zähnen für die Zahnscheibe (4;6) und der relativen Positionen des zylindrischen Ritzels (1) und der Zahnscheibe (4;6) beim Eingreifen,
- Bereitstellen einer Form oder eines Umformwerkzeugs, das einen Hohlraum zum Formen der Zahnscheibe (4;6) aufweist,
wobei der Hohlraum eine Form aufweist, die das Formen einer Zahnscheibe (4;6) gestattet, die Zahnflanken (13) mit der vorbestimmten Form aufweist, wobei die Zahnflanken (13) mit einer Zugabe zur Nachbearbeitung (18) versehen sind und die Zahnbasis (8;8') der Zahnscheibe am tiefsten Punkt (16) des Zahnzwischenraums der Zahnscheibe in Bezug auf die theoretische Basisausrundung (20) ein Tiefenspiel (17) aufweist, und damit eine verkleinerte Oberfläche der Zahnflanke der Zahnscheibe aufweist,
- Formen der Zahnscheibe (4;6) in der Form oder dem Umformwerkzeug,
- Bereitstellen eines zylindrischen Ritzels (1), das eine Geometrie gemäß der ausgewählten Geometrie des Ritzel aufweist,
- Kombinieren der Zahnscheibe (4;6) und des zylindrischen Ritzels (1).

10. Verfahren nach Anspruch 9, wobei das Verfahren weiterhin den Schritt des Härtens der Zahnflanken (13) der Zahnscheibe umfasst.

11. Verfahren nach Anspruch 9 oder 10, wobei das Verfahren weiterhin den Schritt des Nachbearbeitens der Zahnflanken (13) der Zahnscheibe umfasst, wobei durch das Nachbearbeiten die Nachbearbeitungszugabe teilweise oder vollständig entfernt wird.

## Revendications

1. Transmission à roue dentée plate comprenant une roue dentée plate et pignon cylindrique s'engrenant avec ladite roue dentée plate,
le piston cylindrique (1) ayant un axe central de pignon (2) et une denture hélicoïdale ou une denture droite, dont la longueur s'étend sensiblement parallèlement à l'axe central de pignon (2), les dents de ladite denture comprenant des flancs à développante, lesquels flancs à développante d'une dent sont raccordés entre eux par une tête de dent de pignon,
la roue dentée plate (4 ; 6) comprenant :
un axe central de roue dentée plate (3), qui à l'usage, est à un angle relatif différent de zéro degré par rapport à l'axe central de pignon (2), et
un corps solide ou annulaire avec la denture de roue dentée plate qui a été réalisé par formage sans copeau à l'aide d'un moule ou d'une matrice,
laquelle denture de roue dentée plate comprend des dents de roue dentée plate qui sont positionnées sur une largeur de dent sur le corps solide ou annulaire autour de l'axe central de roue dentée plate (3 ; 5) avec des espaces de dent de roue dentée plate entre les dents de roue dentée plate,
chaque dent de roue dentée plate ayant deux flancs de roue dentée plate (13),
la forme des flancs de roue dentée plate étant dérivée des flancs à développante des dents du pignon cylindrique (1), du nombre de dents sur la roue dentée plate et des positions du pignon et de la roue dentée plate l'une par rapport à l'autre,
chacune des dents de roue dentée plate comprenant en outre une tête de dent de roue dentée plate (12) pour raccorder les flancs de roue dentée plate au niveau de la partie supérieure de la dent de roue dentée plate, et
une emplanture de dent de roue dentée plate (8 ; 8') pour raccorder les flancs de roue dentée plate des dents de roue dentée plate adjacentes du côté de l'emplanture de la dent de roue dentée plate dans l'espace de dent de roue dentée plate,
l'emplanture de dent de roue dentée plate ayant un flanc de raccord d'emplanture théorique (20) qui est dérivé du mouvement relatif de la tête de dent de pignon par rapport à la roue dentée plate, lequel flanc de raccord d'emplanture théorique (20) a le point le plus profond (7),
**caractérisée en ce que** l'emplanture de dent de roue dentée plate (8 ; 8') de la roue dentée plate, au point le plus profond (16) de l'espace de dent de roue dentée plate, a une profondeur de jeu (17) par rapport au flanc de raccord d'emplanture théorique (20), et avec celui-ci une surface réduite du flanc de roue dentée plate.

2. Transmission à roue dentée plate selon la revendication 1, dans laquelle l'emplanture de dent de roue dentée plate (8, 8') sur toute la largeur de la dent, a un premier flanc de raccord avec un rayon de flanc de raccord (R1) qui est supérieur à 1,0 millimètre.

3. Transmission à roue dentée plate selon la revendication 1 ou 2, dans laquelle l'emplanture de dent de roue dentée plate (8, 8'), sur toute la largeur de la dent, a un premier flanc de raccord avec un rayon de flanc de raccord (R1), le premier rayon de flanc de raccord se confond de manière continue, au point le plus profond de l'espace de dent de roue dentée plate, dans le premier rayon de flanc de raccord de la dent de roue dentée plate opposée, et le rayon de flanc de raccord (R1) est plus grand à proximité d'un plus petit diamètre (10) de la denture de roue dentée plate qu'à proximité d'un plus grand diamètre (11) de la denture de roue dentée plate.

4. Transmission à roue dentée plate selon la revendication 1 ou 2, dans laquelle, à proximité d'un plus grand diamètre (11) de la denture de roue dentée plate, le premier flanc de raccord a un rayon de flanc de raccord (R1) qui continue sans interruption dans les deux dents de roue dentée plate, et à proximité d'un plus petit diamètre (10) de la denture de roue dentée plate, le premier flanc de raccord conserve le même rayon de flanc de raccord (R2) des deux côtés, avec une partie plane ou à proximité du point le plus profond (16) de l'emplanture de dent de roue dentée plate.

5. Transmission à roue dentée plate selon les revendications précédentes, dans laquelle l'emplanture de dent de roue dentée plate (8, 8') a un premier flanc de raccord sur toute la largeur de la dent, avec un rayon de flanc de raccord (R1), et le premier flanc de raccord se confond dans une surface de raccordement qui est approximativement perpendiculaire au corps solide ou annulaire et qui coupe le flanc, et dans laquelle les deux surfaces de raccordement d'une dent de roue dentée plate ont un jeu dans la direction de l'axe central de roue dentée plate (3, 5).

6. Transmission à roue dentée plate selon l'une quelconque des revendications précédentes, dans laquelle le flanc de roue dentée plate (13) de la roue dentée plate a été usiné par réusinage, par exemple meulage et/ou fraisage et/ou laminage ou raclage-fonçage.

7. Transmission à roue dentée plate selon la revendication 6, dans laquelle le flanc de roue dentée plate (13), avant le réusinage, a été durci avec une profondeur de durcissement qui est supérieure à la valeur minimum de la profondeur de jeu (17).

8. Transmission à roue dentée plate selon les revendications précédentes, dans laquelle la profondeur de jeu (17) s'étend jusqu'au flanc (13).

9. Procédé pour fabriquer une transmission à roue dentée plate selon la revendication 1, lequel procédé comprend les étapes suivantes consistant à :
sélectionner la géométrie d'un pignon cylindrique (1) avec laquelle on prévoit d'engrener la roue dentée plate à fabriquer,
ledit piston cylindrique (1) ayant un axe central de pignon (2) et une denture hélicoïdale ou denture droite, dont la longueur s'étend sensiblement parallèlement à l'axe central de pignon (2), les dents de ladite denture comprenant des flancs à développante, lesquels flancs à développante d'une dent sont raccordés entre eux par une tête de dent de pignon,
sélectionner le nombre souhaité de dents pour la roue dentée plate (4 ; 6),
déterminer des positions relatives du pignon cylindrique (1) et de la roue dentée plate (4 ; 6) lors de l'engrènement,
déterminer la forme des flancs de roue dentée plate (13) et le flanc de raccord d'emplanture théorique (20) en fonction de la géométrie sélectionnée du pignon cylindrique, du nombre souhaité de dents pour la roue dentée plate (4 ; 6) et les positions relatives du pignon cylindrique (1) et de la roue dentée plate (4 ; 6) lors de l'engrènement,
prévoir un moule ou une matrice ayant une cavité pour former la roue dentée plate (4 ; 6),
laquelle cavité a une forme de cavité qui permet le formage d'une roue dentée plate (4 ; 6) qui a des flancs (13) de la forme déterminée, lesquels flancs sont prévus avec une tolérance de réusinage (18) et l'emplanture de dent de roue dentée plate (8 ; 8') de la roue dentée plate, au point le plus profond (16) de l'espace de dent de roue dentée plate, a une profondeur de jeu (17) par rapport au flanc de raccord d'emplanture théorique (20), et avec ce dernier une surface réduite du flanc de roue dentée plate,
former la roue dentée plate (4 ; 6) dans le moule ou la matrice,
prévoir un pignon cylindrique (1) qui a une géométrie selon la géométrie de pignon sélectionnée,
combiner la roue dentée plate (4 ; 6) et le pignon cylindrique (1).

10. Procédé selon la revendication 11, lequel procédé comprend l'étape supplémentaire consistant à faire durcir les flancs (13) de la roue dentée plate.

11. Procédé selon la revendication 10 ou 11, lequel procédé comprend l'étape supplémentaire consistant à réusiner les flancs (13) de la roue dentée plate, grâce auquel réusinage, la tolérance de réusinage est retirée partiellement ou complètement.
